# EUROPEAN PATENT APPLICATION

(11) **EP 2 325 486 A1**
(43) Date of publication of application: **25.05.2011**
(21) Application number: 08792463.5
(22) Date of filing: 14.08.2008
(51) Int. Cl.: F03D 11/00

(54) **WIND DRIVEN ELECTRIC POWER GENERATOR**

(71) Applicant: Mitsubishi Heavy Industries, Ltd., Tokyo 108-8215 (JP)
(72) Inventor: OKANO, Yasushi, Nagasaki-shi Nagasaki 850-8610 (JP); TAKAYANAGI, Kazufumi, Nagasaki-shi Nagasaki 850-8610 (JP); NODA, Yoshitomo, Nagasaki-shi Nagasaki 851-0392 (JP)
(74) Representative: Henkel, Feiler & Hänzel
(86) International application number: PCT/JP2008/064582
(87) International publication number: WO 2010/018630

(57) **Abstract**

A wind turbine generator is provided in which damage to a rolling element due to running out of lubricant oil in a main bearing (10) can be reliably prevented even if a wind turbine idles during a power failure. In a wind turbine generator in which the main bearing (10) of a laterally disposed main shaft (6) has an oil supply port (14) and a drain port (15) for lubricant oil, and in which the lubricant oil supplied from an oil pump flows through the oil supply port (14) into the main bearing (10) and flows out through the drain port (15) to circulate, the drain port (15) is disposed above the center of a lower rolling element disposed in the main bearing (10).

## Description

### Technical Field

The present invention relates to a wind turbine generator in which a main shaft that rotates when receiving wind power drives a generator to generate electricity.

### Background Art

A wind turbine generator is an apparatus that generates electricity in such a manner that a rotor head equipped with wind turbine blades rotates when receiving wind power, and the rotation is increased in speed by a gear box to drive a generator. To this end, the wind turbine generator is provided with a sliding member that needs lubrication, such as a main bearing.

As related art concerning lubrication, a lubricating structure for a mechanical boiler is disclosed in which good sealing performance of a mechanical seal is maintained by supplying a sufficient amount of oil to the mechanical seal. With this related art, an air bleed hole is formed in a housing to release the pressure in a space formed between a bearing that rotatably supports a rotor shaft and a mechanical seal fitted on the outer circumference of the rotor shaft. The air bleed hole in this case is formed at 20 to 45° with respect to an oil supply port (for example, refer to Patent Document 1).
Patent Document 1: Japanese Unexamined Utility Model Application, Publication No. Hei 7-25239

### Disclosure of Invention

The wind turbine of a wind turbine generator idles when receiving wind while the wind turbine is halted (while power generation is halted). Therefore, lubricant oil is supplied while the wind turbine is idling by driving an oil pump so as to prevent the main bearing from running out of lubricant oil.

However, the above-mentioned oil pump cannot be driven during a power failure. Therefore, a risk of damage to a rolling element etc. due to running out of oil during idling remains in the main bearing.
The present invention is made in consideration of the above-described circumstances, and it is an object thereof to provide a wind turbine generator in which damage to the rolling element due to running out of lubricant oil in the main bearing can be reliably prevented even if the wind turbine idles during a power failure.

The present invention adopts the following solutions to solve the above problems.
In a wind turbine generator according to the present invention in which a bearing of a main shaft disposed in the lateral direction has an oil supply port and a drain port for lubricant oil, and the lubricant oil supplied from an oil pump flows into the bearing through the oil supply port and flows out through the drain port to circulate, the drain port is disposed above the center of a lower rolling element disposed in the bearing.

According to the present invention, the drain port is disposed above the center of the lower rolling element disposed in the bearing. Therefore, while the oil pump is halted, the oil surface of the lubricant oil remaining in the bearing can be set above the center of the lower rolling element to physically immerse the lower rolling element in the oil.

In the invention described above, it is preferable to provide a normally closed waste-oil port at the lowest part of the bearing. This allows all of the lubricant oil to be discharged from the bearing during maintenance, such as replacement of the lubricant oil.

According to the present invention described above, even if the oil pump is halted, the lower rolling element can be physically immersed in oil by maintaining the oil surface of the lubricant oil above the center of the lower rolling element. Therefore, for example, even if the wind turbine idles when the oil pump cannot be operated because the power supply is cut off while the wind turbine is halted, lubricant oil in which the lower rolling element can be immersed is present in the bearing to allow lubrication. Therefore, this can eliminate a risk such as damage to the rolling elements etc. due to running out of oil.

### Brief Description of Drawings

[Fig. 1] Fig. 1 is a diagram showing a configuration example of a main bearing as an embodiment of a wind turbine generator according to the present invention.
[Fig. 2] Fig. 2 is an enlarged view of relevant parts of the main bearing (an enlarged view of part A in Fig. 4).
[Fig. 3] Fig. 3 is a diagram showing the overall configuration of the wind turbine generator.
[Fig. 4] Fig. 4 is a sectional view of relevant parts showing a configuration example of the main bearing provided at the wind turbine generator.

### Explanation of Reference Signs:

- 1:: wind turbine generator
- 3:: nacelle
- 4:: rotor head
- 5:: wind-turbine rotor blade
- 6:: main shaft
- 10:: main bearing
- 11:: outer race
- 12:: inner race
- 13:: bearing (rolling element)
- 14:: oil supply port
- 15:: drain port
- 16:: space
- 17:: waste-oil port

### Best Mode for Carrying Out the Invention

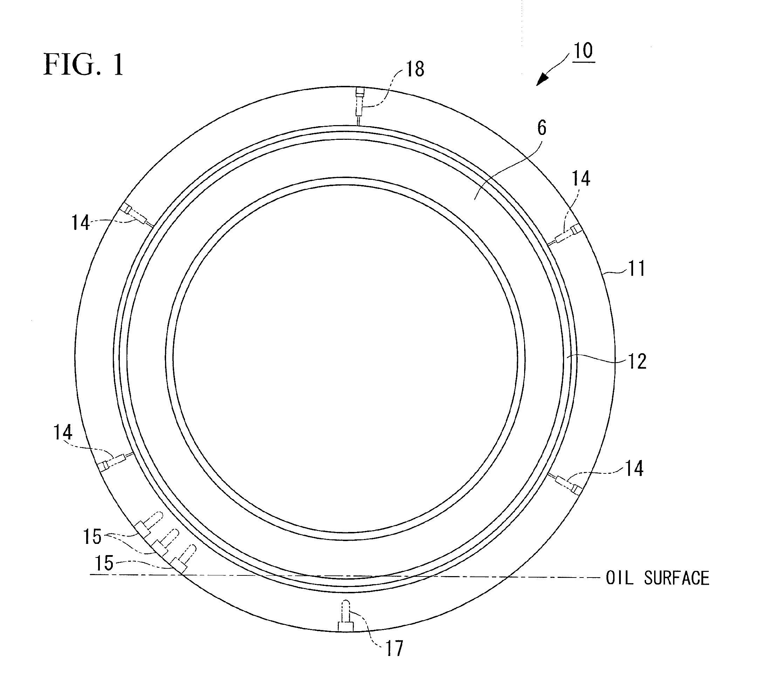

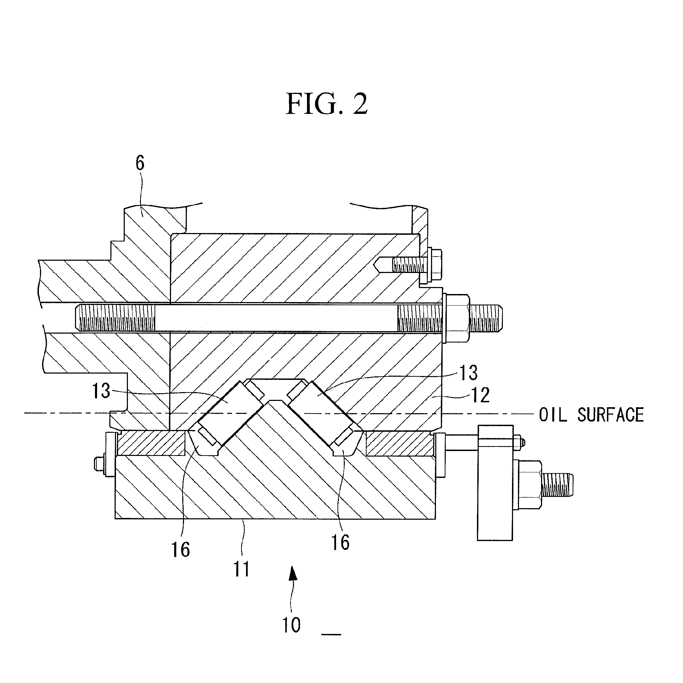

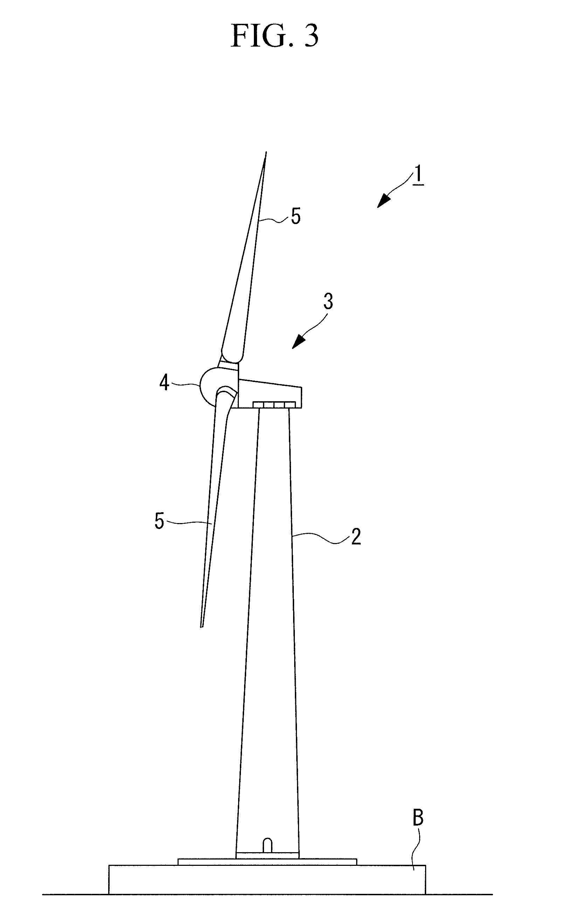

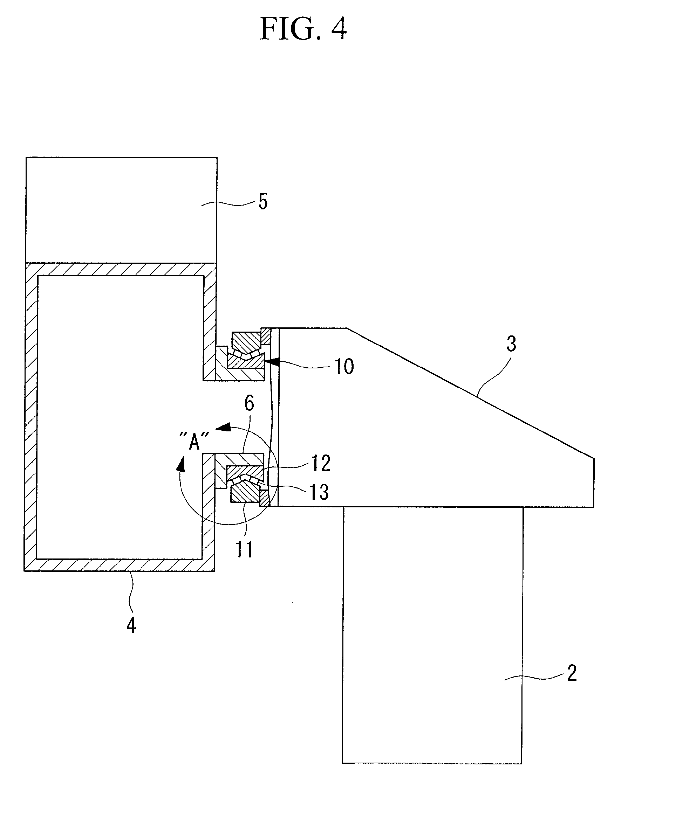

An embodiment of a wind turbine generator according to the present invention will be described hereinbelow with reference to Figs. 1 to 4.
A wind turbine generator 1 shown in Fig. 3 includes a tower (also referred to as "tower") 2 that is vertically erected on a base B, a nacelle 3 mounted on the upper end of the tower 2, and a rotor head 4 mounted on the nacelle 3 so as to be supported rotatably about the substantially horizontal, lateral rotation axis thereof.
The rotor head 4 has a plurality of (for example, three) wind-turbine rotor blades 5 mounted in a radial pattern about its rotation axis. Thus, the power of wind blowing against the wind-turbine rotor blades 5 from the direction of the rotation axis of the rotor head 4 is converted to motive power that rotates the rotor head 4 about the rotation axis.

The above-described wind turbine generator 1 is equipped with a main bearing 10 that supports a main shaft 6 that is substantially horizontally disposed. The main bearing 10 is a rolling bearing configured to receive lubricant oil supplied from an oil pump (not shown) and to circulate it in the bearing to thereby lubricate a sliding member such as a rolling element.
The main bearing 10 shown in the drawing has a large number of bearings 13 serving as rolling elements between an outer race 11 and an inner race 12. In this case, the outer race 11 serves as a fixed side, and the inner race 12 is joined with the main shaft 6 and is rotated therewith.

The outer race 11 is provided with oil supply ports 14 connected to the oil pump through lubricant oil pipes. In the example shown in the drawing, they are provided at four separate locations in the circumferential direction of the outer race 11; however, it is not limited thereto. The positions at which the oil supply ports 14 are provided are higher than an oil surface, described below.
The above-described outer race 11 is further provided with drain ports 15 for collecting the lubricant oil that has circulated in the main bearing 10 and returning it to a lubricant oil tank and the oil pump through lubricant oil pipes. The drain ports 15 are disposed above the center of the lower bearings of the bearings 13 disposed in the main bearing 10.

That is, the lowest position of the drain ports 15 is set so as to leave lubricant oil so that, of the large number of bearings 13 disposed in the circumferential direction, at least one located at the lowest position can be immersed. In other words, the positions of the drain ports 15 are set so as to form an oil surface with a level at which, after the lubricant oil in the main bearing 10 has been collected through the drain ports 15 by gravitation as the oil pump is halted, almost the whole of the bearing 13 at the lowest position is physically immersed in the lubricant oil remaining at the lower part of a space 16 that is formed as a lubricant oil channel communicating in the circumferential direction in the main bearing 10.

The above-described outer race 11 is further provided with a normally closed waste-oil port 17 at the lowest part of the main bearing 10. The waste-oil port 17 is a lubricant-oil discharge (drain) port communicating with the lowest position in the space 16 and is completely closed by a plug or valve while the wind turbine generator 1 is normally operated.
Reference numeral 18 in the drawing denotes an air-breather mounting position communicating with the vicinity of the upper part of the space 16.

In the wind turbine generator 1 provided with the thus-configured main bearing 10, the oil pump sucks the lubricant oil in the lubricant oil tank and pumps it during normal operation in which the rotor head 4 is rotated by wind power to generate electricity. The lubricant oil is supplied through the oil supply ports 14 into the main bearing 10, passes through the space 16 to lubricate the sliding surfaces of the bearings 13, and is thereafter collected in the lubricant oil tank through the drain ports 15. Accordingly, while the wind turbine generator 1 is operating normally, the circulating lubricant oil is supplied to the sliding members in the main bearing 10 by the operation of the oil pump to perform lubrication.

On the other hand, when the oil pump cannot be operated due to a power failure etc. while the wind turbine generator 1 is in the halted state, the lubricant oil supplied into the main bearing 10 flows out through the drain ports 15 by gravitation. Therefore, the lubricant oil remains in the space 16 in the main bearing 10 while forming an oil surface that is substantially flush with the lowest position of the drain port 15. In a state in which such an oil surface is formed, almost the whole of at least the bearing 13 at the lowest position is immersed in the lubricant oil.

Accordingly, with the wind turbine generator 1 in the halted state, even if the rotor head 4 that has received wind idles, lubrication using the lubricant oil is achieved, thus preventing damage to the bearings due to running out of the lubricant oil. That is, since a load during idling is significantly smaller than that during normal operation, damage to the bearings 13, such as a seizure, does not occur if there is lubricant oil that forms the above-described oil surface.
During maintenance, such as replacement of the lubricant oil, all of the lubricant oil remaining in the main bearing 10 can be completely discharged by opening the waste-oil port 17.

In this way, according to the present invention described above, while the oil pump is halted, the oil surface of the lubricant oil is set above the center of the lower bearings 13 to physically immerse the lower bearings 13 in the lubricant oil. Therefore, even if the oil pump is halted, damage to the bearings 13 due to running out of oil can be prevented even during idling.
The present invention is not limited to the above-described embodiment; various modifications can be made as appropriate without departing from the spirit thereof.

## Claims

1. A wind turbine generator in which a bearing of a main shaft disposed in the lateral direction has an oil supply port and a drain port for lubricant oil, and the lubricant oil supplied from an oil pump flows into the bearing through the oil supply port and flows out through the drain port to circulate, wherein
the drain port is disposed above the center of a lower rolling element disposed in the bearing.

2. The wind turbine generator according to Claim 1, further comprising a normally closed waste-oil port at the lowest part of the bearing.
